(19) Europäisches Patentamt
European Patent Office
Office européen des brevets

(11) **EP 2 020 611 A1**

(12) **DEMANDE DE BREVET EUROPEEN**

(43) Date de publication:
**04.02.2009 Bulletin 2009/06**

(51) Int Cl.:
***G02B 6/02*** *(2006.01)* ***G02F 1/35*** *(2006.01)*

(21) Numéro de dépôt: **07370013.0**

(22) Date de dépôt: **26.07.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(71) Demandeur: **Universite des Sciences et Technologies de Lille (USTL)**
**59650 Villeneuve d'Ascq (FR)**

(72) Inventeurs:
• **Quiquempois, Yves**
**59520 Marquette lez lille (FR)**
• **Bouwmans, Géraud**
**59000 Lille (FR)**

• **Perrin, Mathias**
**33650 La Brède (FR)**
• **Betourne, Aurélie**
**59000 Lille (FR)**
• **Douay, Marc**
**59000 Lille (FR)**
• **Delplace, Karen**
**59940 Estaires (FR)**
• **Le Rouge, Antoine**
**59800 Lille (FR)**
• **Bigot, Laurent**
**59260 Hellemmes-Lille (FR)**

(74) Mandataire: **Matkowska, Franck**
**Matkowska & Associés**
**9 Rue Jacques Prévert**
**59650 Villeneuve d'Ascq (FR)**

(54) **Fibre optique microstructurée hybride permettant un guidage par bandes interdites photoniques et par reflexion totale interne et optimisée pour des applications non linéaires**

(57) La fibre optique microstructurée comporte un coeur (4) entouré par une gaine (1) ; la gaine (1) comprend un matériau de base d'indice de réfraction (n1) et une pluralité d'inclusions d'au moins deux types différents, un premier type d'inclusions (2) d'indice de réfraction n2 (n2 >n1), et un deuxième type d'inclusions (3) d'indice de réfraction n3 (n3<n1). Les inclusions (2, 3) sont agencées de manière à obtenir un guidage d'un mode fondamental de la lumière par réflexion totale interne et un guidage mode fondamental de la lumière par bandes interdites photoniques. Le mode fondamental guidé dans la première bande interdite (BG1) et le mode fondamental guidé par réflexion totale interne (RTI) respectent cumulativement les conditions (a) et (b) suivantes pour au moins deux longueurs d'ondes $\lambda_i$ différentes :

$$(a) \quad \sum_{i=1}^{m-1} \frac{1}{\lambda_i} = \frac{1}{\lambda_m}$$

$$(b) \quad \sum_{i=1}^{m-1} \frac{n_{\lambda_i}}{\lambda_i} = \frac{n_{\lambda_m}}{\lambda_m}$$

m étant un entier supérieur ou égal à 3, et $n_{\lambda i}$ étant la valeur de l'indice de réfraction effectif de la fibre optique à la longueur d'ondes $\lambda_i$,

Parmi les longueurs d'onde $\lambda_i$ respectant les conditions (a) et (b), au moins une longueur d'onde ($\lambda_{RTI}$) appartient au mode fondamental guidé par réflexion totale interne (RTI), et au moins une longueur d'onde ($\lambda_{BG1}$) appartient au mode fondamental guidé dans la première bande interdite (BG1).

Fig.1

## Description

### Domaine technique

La présente invention concerne une fibre optique microstructurée hybride permettant un guidage de la lumière à la fois par un mécanisme de bandes interdites photoniques et par un mécanisme de réflexion totale interne. Cette fibre optique microstructurée hybride présente une section transverse nouvelle, qui la rend particulièrement adaptée pour des applications non- linéaires, telles que par exemple, mais non exclusivement, le doublage de fréquence (w+w → 2w), le triplage de fréquence ( w+w+w → 3w) , la génération de photons jumeaux ( 2w → w +w) , la génération de photons triplets ( 3w → w+w+w) , etc ... Cette fibre optique peut avantageusement être utilisée dans de nombreux domaines techniques, tels que par exemple, les lasers de fortes puissance « tout fibre », la sécurisation des réseaux de télécommunication par cryptographie quantique, la génération de nouvelles fréquences par effets non-linéaires dans des domaines techniques variés, et par exemple dans le domaine des télécommunications ou dans le domaine biomédical.

### Art antérieur

Les recherches récentes dans le domaine des fibres optiques ont conduit au développement d'un nouveau type de fibres dites microstructurées, et également désignées fibres à cristaux photoniques («photonic crystal fibres » - PCF), ou fibres à bandes interdites photoniques (« photonic bandgap fibres » ou « PBGF »).

D'une manière générale, ces fibres microstructurées comportent un coeur (« core ») entouré d'une gaine («cladding »), qui est réalisée dans un matériau de base (« background material ») le plus souvent en silice, et qui comprend un réseau transverse d'inclusions longitudinales présentant des indices de réfraction différents de l'indice de réfraction du matériau de base de la gaine.

L'indice de réfraction du matériau de base de la fibre optique (par exemple la silice) varie en fonction de longueur d'onde (dispersion). A la différence des fibres optiques à saut d'indice, les fibres microstructurées permettent avantageusement, grâce à la présence desdites inclusions d'indice de réfraction différents, de modifier fortement cette dispersion.

Un premier type d'inclusions mis en oeuvre est constitué par des inclusions présentant un indice de réfraction plus élevé que l'indice de réfraction du matériau de base. Par exemple, mais non exclusivement, lorsque le matériau de base est en silice, un premier type d'inclusions d'indice de réfraction plus élevé peut être constitué par des inclusions de silice dopée à l'oxyde de germanium ($GeO_2$).

Un deuxième type d'inclusions mis en oeuvre est constitué par des inclusions présentant un indice de réfraction plus faible que l'indice de réfraction du matériau de base. Par exemple, mais non exclusivement, lorsque le matériau de base est en silice, un deuxième type d'inclusions d'indice de réfraction plus faible peut être constitué par des cavités ou trous remplis d'un fluide (gaz ou liquide), et le plus souvent remplis d'air.

Selon le cas, la gaine peut comporter uniquement des inclusions d'indice de réfraction élevé, ou uniquement des inclusions d'indice de réfraction faible, ou un mélange des deux types d'inclusions.

Selon le cas, les inclusions peuvent être agencées sous la forme d'un réseau périodique ou être distribuées aléatoirement, ou être distribuées selon une configuration comportant à la fois des régions périodiques et des régions non périodiques.

En fonction de leur structure transverse, les fibres optiques microstructurées permettent une propagation de la lumière suivant l'axe longitudinal de la fibre, par un guidage par réflexion totale interne ou par un guidage par bandes interdites photoniques.

En 2003 Jesper Laegsgaard et Anders Bjarklev ont décrit dans la publication « Doped photonic bandgap fibers for short-wavelength non linear devices », Vol 28, N°10, p 783 (2003), OPTICS LETTERS, une fibre optique microstructurée comportant des plots de silice dopée oxyde de germanium et des trous d'air, et présentant un zéro de dispersion dans le visible. La fibre optique microstructurée décrite dans cette publication permet un guidage de la lumière uniquement par bandes interdites photoniques, et ne permet pas un guidage de la lumière par réflexion totale interne, l'indice moyen du coeur de la fibre étant trop faible, du fait de la présence des six trous d'air centraux.

En 2006, Arismar Cerqueira et al ont décrit dans la publication intitulée « Hybrid photonic crystal fiber », Vol 14, N°2 p 926 ( 2006), OPTICS EXPRESS, une fibre optique microstructurée qui comprend des trous d'air et des plots de silice dopée germanium insérés dans un matériau de base en silice non dopée, et dont la structure transverse permet de guider la lumière à la fois par un mécanisme de bandes photoniques interdites dans une première direction, et par réflexion totale interne dans une seconde direction perpendiculaire à ladite première direction. Dans cette structure de fibre, et pour une même longueur d'onde, le mode est guidé à la fois par bandes interdites photoniques et par réflexion totale.

Les fibres microstructurées décrites dans les publications précitées ne peuvent pas être utilisées pour des applications non linéaires, telles que par exemple le doublage de fréquence (w+w → 2w), le triplage de fréquence ( w+w+w → 3w) , la génération de photons jumeaux ( 2w → w +w), la génération de photons triplets ( 3w → w+w+w) , etc ... A ce jour, dans ces applications optiques non linéaires, on utilise des cristaux non linéaires. Or ces cristaux non linéaires présentent plusieurs inconvénients. Dans de tels cristaux, l'onde optique n'est pas guidée, si bien que les longueurs d'interaction non-linéaires sont de l'ordre de quelques centimètres contre quelques mètres pour les fibres optiques. En outre l'insertion de composants massifs mettant en oeuvre ces cristaux non linéaires conduit inévitablement à des pertes et à des problèmes d'alignement, et donc à des dispositif fragiles et coûteux.

Une autre étude publiée par A. Efimov, A.J. Taylor, F.G Omenetto, J.C. Knight, W.J. Wadsworth and P. St.J. Russel dans la publication intitulée « Phase matched third harmonics generation in microstructured fibers », 6 Octobre 2003, Vol11 No 20 p 2567 - OPTICS EXPRESS, décrit une solution pour obtenir un triplage de fréquence avec un accord d'indice de phase. La solution consiste à réaliser un accord de phase entre le mode fondamental qui se propage par réflexion totale interne dans la fibre optique microstructurée et des modes transverses d'ordre supérieur, notamment de troisième harmonique. Toutefois, les résultats obtenus dans cette étude ne sont pas vraiment satisfaisants, car la structure transverse du mode de troisième harmonique présente de multiples lobes, ce qui est préjudiciable au rendement et à l'exploitation de cette solution.

**Objectifs de l'invention**

Un objectif visé par l'invention est de proposer une nouvelle fibre optique microstructurée qui peut avantageusement être utilisée en remplacement des cristaux non linéaires dans des applications optiques non linéaires telles que par exemple la génération de photons jumeaux (2w → w +w ou plus généralement $w_1 \rightarrow w_2 + w_3$), la génération de photons triplets ( 3w → w+w+w ou plus généralement $w_1 \rightarrow w_2 + w_3 + w_4$), ou telles que par exemple la génération de fréquences par effet non linéaire, et en particulier le mélange à 3 ondes ($w_1 + w_2 \rightarrow w_3$ ) ou plus particulièrement le doublage de fréquence (w+w → 2w), le mélange à 4 ondes ($w_1 + w_2 + w_3 \rightarrow w_4$, $w_1 + w_2 \rightarrow w_3 + w_4$) ou plus particulièrement le triplage de fréquence (w+w+w → 3w).

**Résumé de l'invention**

Cet objectif est atteint par la fibre optique microstructurée définie dans la revendication 1.

Cette fibre optique microstructurée de l'invention présente les caractéristiques techniques suivantes, connues et décrites dans la publication précitée « Doped photonic bandgap fibers for short-waveiength non linear devices », Vol 28, N°10, p 783 (2003), OPTICS LETTERS, Jesper Laegsgaard et Anders Bjarklev. Elle comporte un coeur entouré par une gaine, la gaine comprenant un matériau de base d'indice de réfraction (n1) et une pluralité d'inclusions d'au moins deux types différents, un premier type d'inclusions d'indice de réfraction (n2) supérieur à l'indice de réfraction (n1) du matériau de la gaine, et un deuxième type d'inclusions d'indice (n3) inférieur à l'indice de réfraction (n1) du matériau de base, ladite fibre permettant un guidage d'un mode fondamental de la lumière par bandes interdites photoniques.

De manière caractéristique selon l'invention, le mode fondamental guidé dans la première bande interdite (BG1) et le mode fondamental guidé par réflexion totale interne (RTI) respectent cumulativement les conditions (a) et (b) suivantes pour au moins deux longueurs d'onde $\lambda_i$ différentes :

$$\text{(a)} \quad \sum_{i=1}^{m-1} \frac{1}{\lambda_i} = \frac{1}{\lambda_m}$$

$$\text{(b)} \quad \sum_{i=1}^{m-1} \frac{n_{\lambda_i}}{\lambda_i} = \frac{n_{\lambda_m}}{\lambda_m}$$

m étant un entier supérieur ou égal à 3, et $n_{\lambda i}$ étant la valeur de l'indice de réfraction effectif de la fibre optique à la longueur d'ondes $\lambda_i$,
et parmi les longueur d'onde $\lambda_i$ respectant les conditions (a) et (b), au moins une longueur d'onde ($\lambda_{RTI}$) appartient au mode fondamental guidé par réflexion totale interne (RTI), et au moins une longueur d'onde ($\lambda_{BG1}$) appartient au mode fondamental guidé dans la première bande interdite (BG1).

Dans les conditions (a) et (b) ci-dessus, les longueurs d'onde peuvent être positives ou négatives (cas de la différence de fréquence), bien que seules les longueurs d'onde positives aient un sens physique.

La fibre optique microstructurée de l'invention peut également comporter d'autres caractéristiques techniques additionnelles et facultatives mentionnées dans les revendications annexées qui dépendent de la revendication 1 principale.

**Brève description des dessins**

Les caractéristiques et avantages de l'invention apparaîtront plus clairement et de manière plus complète à la lecture de la description détaillée ci-après d'une variante préférée de réalisation d'une fibre optique microstructurée de l'invention, laquelle description détaillée est donnée à titre d'exemple non limitatif et non exhaustif de l'invention, et en référence aux dessins annexés sur lesquels :

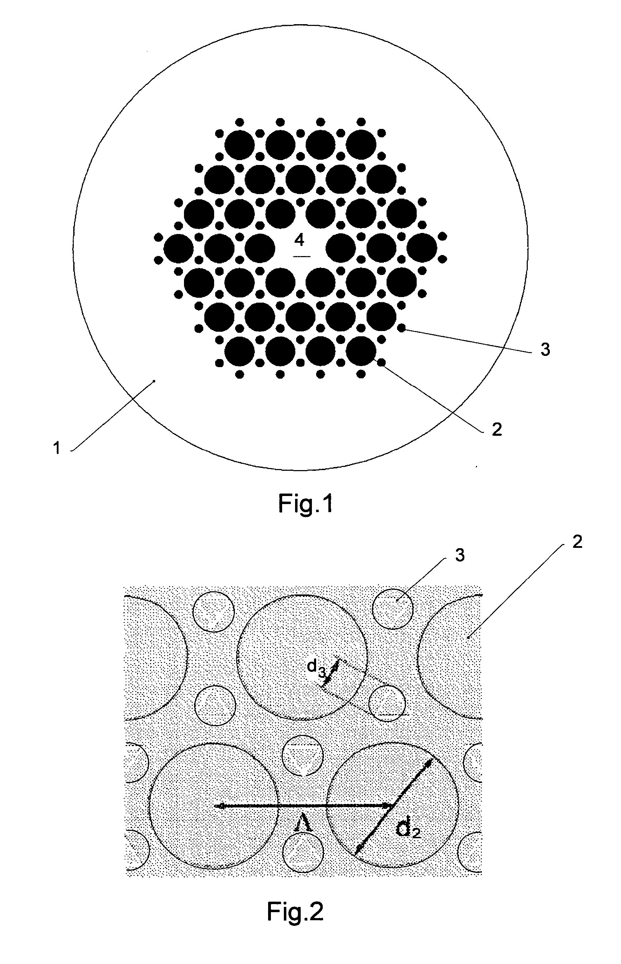

- la figure 1 est une vue en coupe transversale d'une fibre optique microstructurée conforme à une première variante de réalisation de l'invention ;
- la figure 2 est un agrandissement d'une région de la coupe transversale de la figure 1 ;

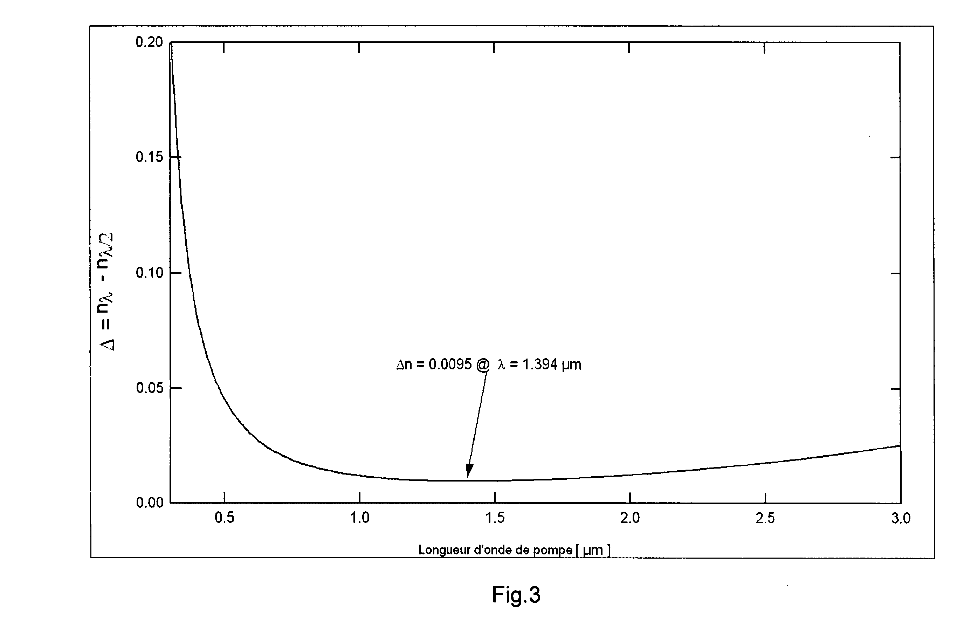

- la figure 3 est une courbe représentant la variation du différentiel (Δ) d'indice de réfraction de la silice pure à deux longueurs d'onde λ et λ/2, pour des longueurs d'onde de pompe λ entre 0,3 μm et 3 μm,

l'indice de réfraction de la silice suivant la loi de Sellmeier ;

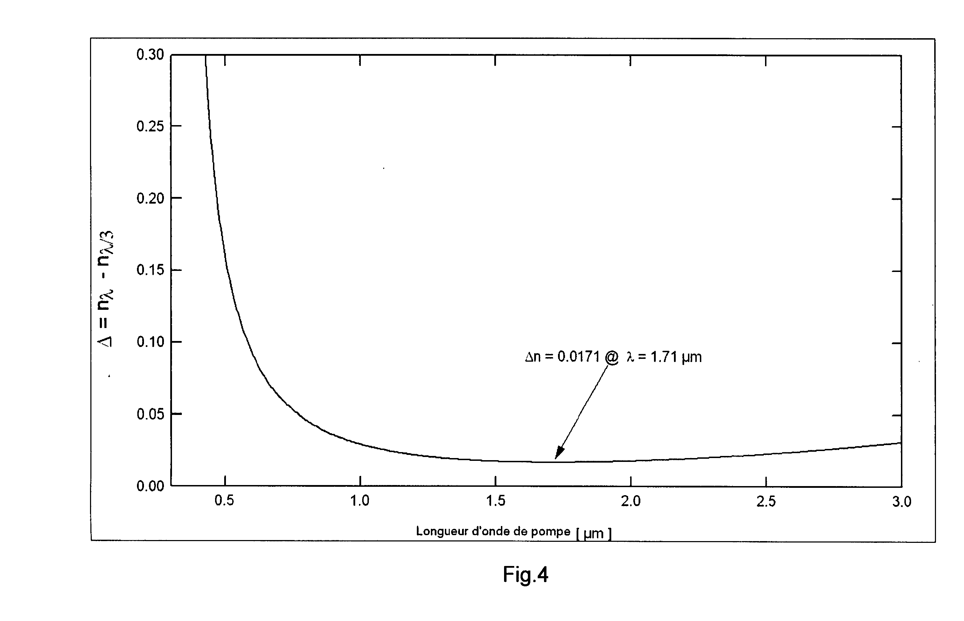

- la figure 4 est une courbe représentant la variation du différentiel ($\Delta$) d'indice de réfraction de la silice pure à deux longueurs d'onde $\lambda$ et $\lambda/3$, pour des longueurs d'onde de pompe $\lambda$ entre 0,3 $\mu$m et 3 $\mu$m, l'indice de réfraction de la silice suivant la loi de Sellmeier ;

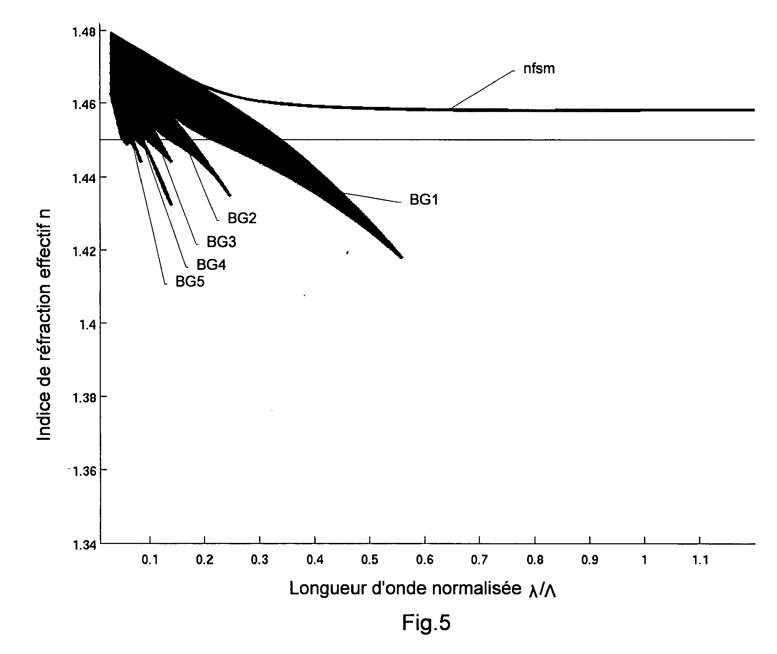

- la figure 5 est un diagramme des bandes interdites photoniques d'une fibre optique comportant le même réseau d'inclusions d'indice de réfraction élevé que la fibre de la figure 1, mais sans défaut au centre et sans inclusion d'indice faible (trous d'air), , l'indice de la silice étant supposé constant et égal à 1,45 ;

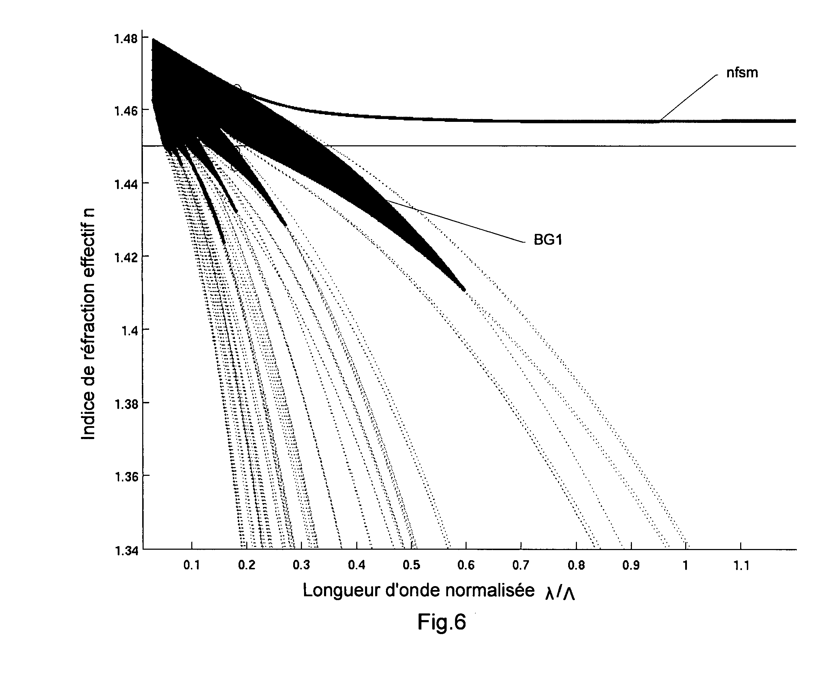

- la figure 6 est un diagramme de bandes interdites photoniques d'une fibre optique comportant le même réseau d'inclusions que la fibre de la figure 1, mais sans défaut au centre, le rapport $d_3/\Lambda$ des inclusions d'indice $n_3$ du réseau valant 0,04 , l'indice de la silice étant supposé constant et égal à 1,45 ;

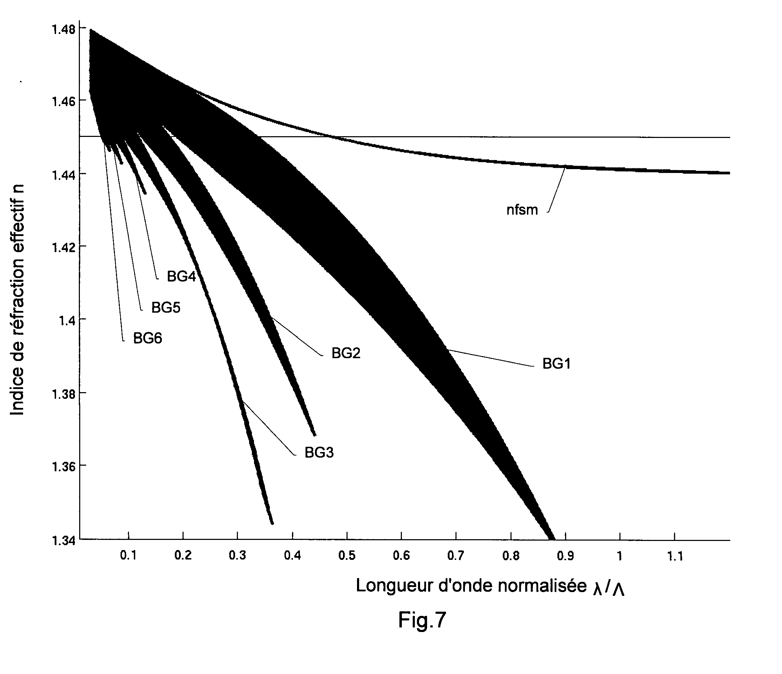

- la figure 7 est un diagramme de bandes interdites photoniques d'une fibre optique comportant le même réseau d'inclusions que la fibre de la figure 1, mais sans défaut au centre, le rapport $d_3/\Lambda$ des inclusions d'indice $n_3$ valant 0,1518, , l'indice de la silice étant supposé constant et égal à 1,45 ;

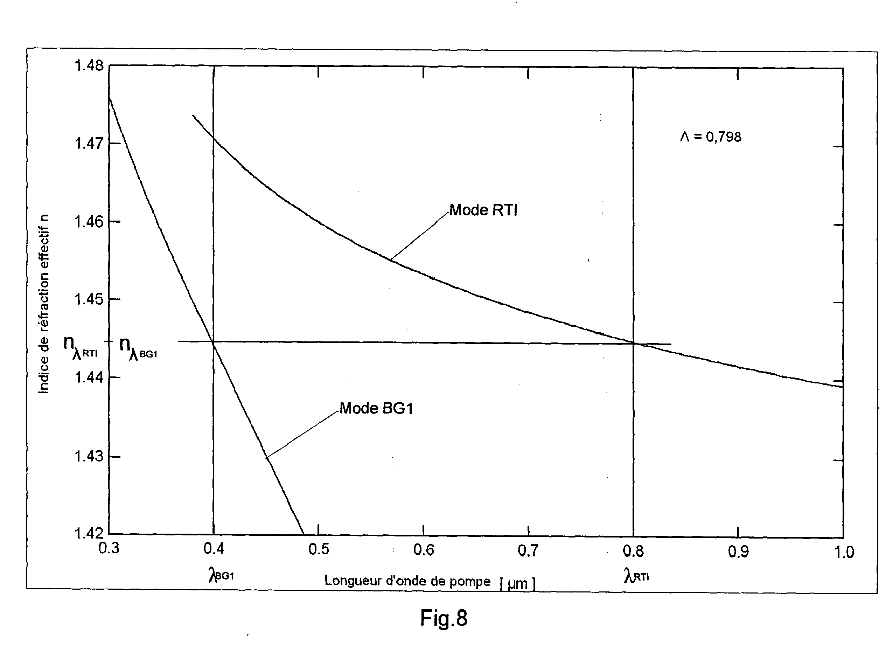

- la figure 8 est un diagramme montrant la variation d'indice effectif, en fonction de la longueur d'onde (en $\mu$m), des modes fondamentaux dans la première bande interdite photonique (BG1) et dans la bande en réflexion totale interne (RTI) d'une fibre optique microstructurée conforme à la figure 1, et caractérisée par un pas $\Lambda$ de réseau d'inclusions valant 0,798$\mu$m et par un rapport $d_3/\Lambda$ des inclusions d'indice $n_3$ valant 0,1518, l'indice de la silice variant selon la loi de Sellmeier ;

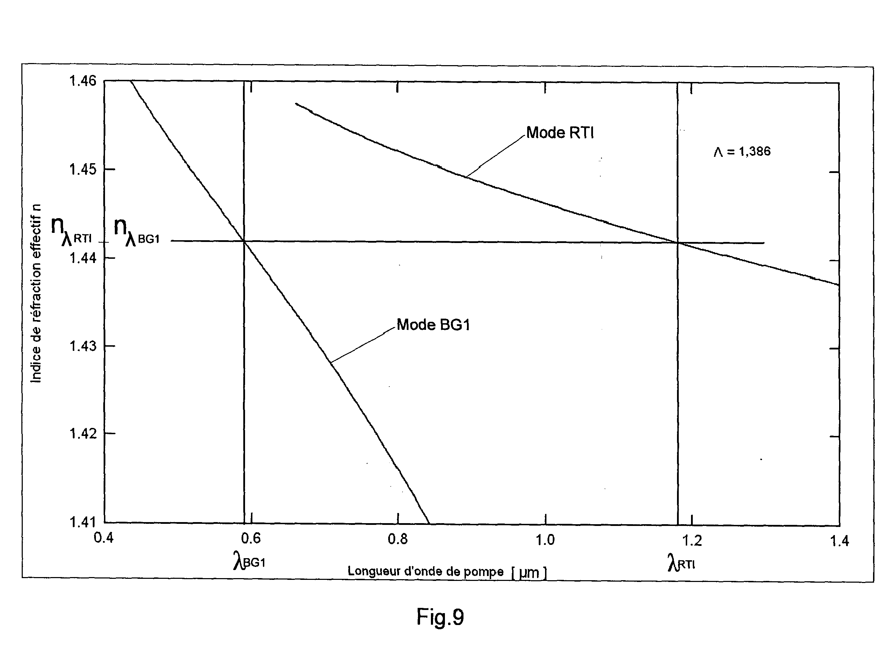

- la figure 9 est un diagramme montrant la variation d'indice effectif, en fonction de la longueur d'onde (en $\mu$m), des modes fondamentaux dans la première bande interdite photonique (BG1) et dans la bande en réflexion totale interne (RTI) d'une fibre optique microstructurée conforme à la figure 1, et caractérisée par un pas $\Lambda$ de réseau d'inclusions valant 1,386$\mu$m et par un rapport $d_3/\Lambda$ des inclusions d'indice $n_3$ valant 0,1518, l'indice de la silice variant selon la loi de Sellmeier ;

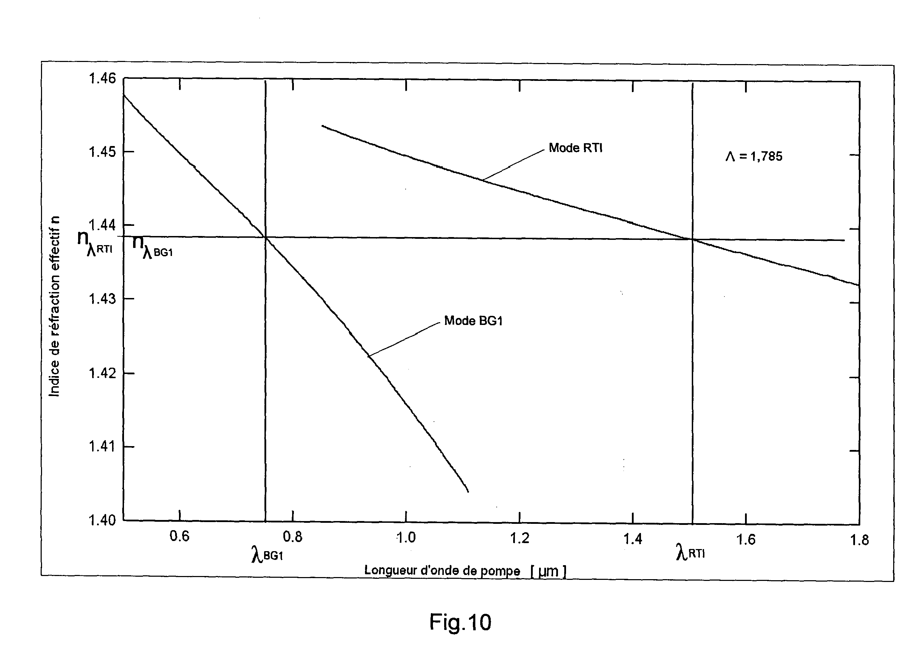

- la figure 10 est un diagramme montrant la variation d'indice effectif, en fonction de la longueur d'onde (en $\mu$m), des modes fondamentaux dans la première bande interdite photonique (BG1) et dans la bande en réflexion totale interne (RTI) d'une fibre optique microstructurée conforme à la figure 1, et caractérisée par un pas $\Lambda$ de réseau d'inclusions valant 1,785$\mu$m, et par un rapport $d_3/\Lambda$ des inclusions d'indice $n_3$ valant 0,1518, l'indice de la silice variant selon la loi de Sellmeier ;

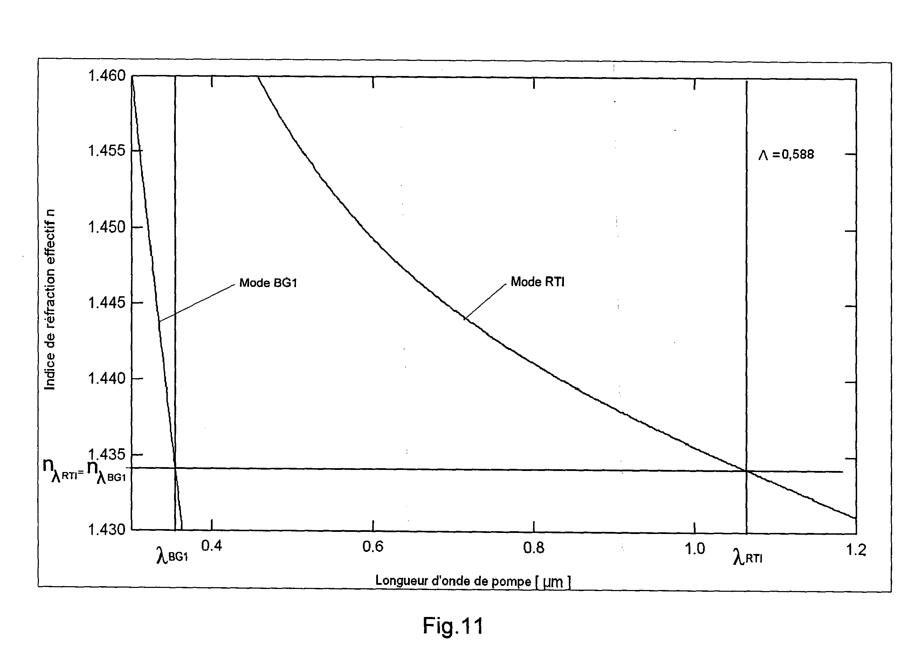

- la figure 11 est un diagramme montrant la variation d'indice effectif, en fonction de la longueur d'onde

(en $\mu$m), des modes fondamentaux dans la première bande interdite photonique (BG1) et dans la bande en réflexion totale interne (RTI) d'une fibre optique microstructurée conforme à la figure 1, et caractérisée par un pas $\Lambda$ de réseau d'inclusions valant 0,585$\mu$m et par un rapport $d_3/\Lambda$ des inclusions d'indice $n_3$ valant 0,1518, l'indice de la silice variant selon la loi de Sellmeier ;

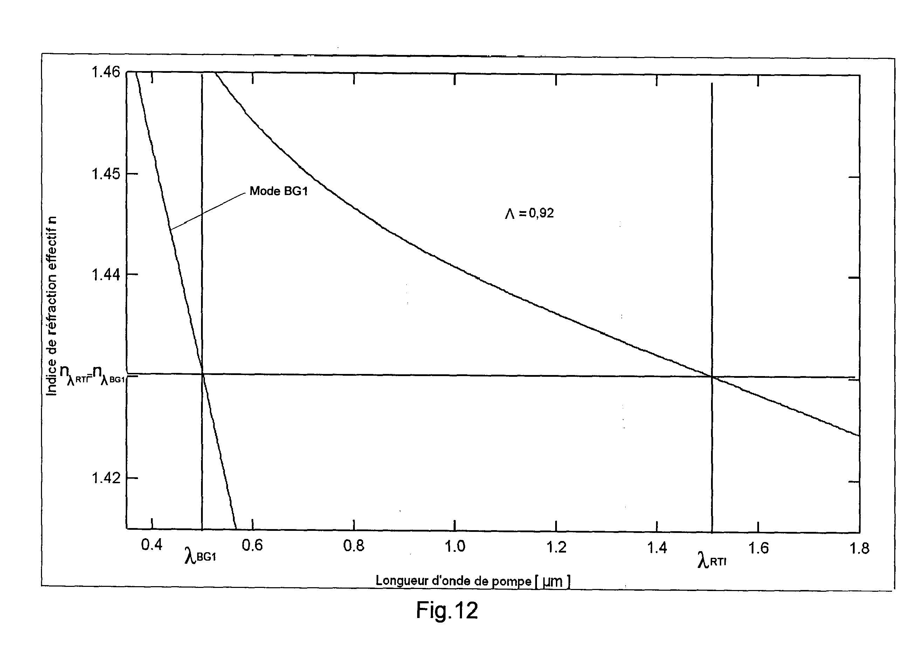

- la figure 12 est un diagramme montrant la variation d'indice effectif, en fonction de la longueur d'onde (en $\mu$m), des modes fondamentaux dans la première bande interdite photonique (BG1) et dans la bande en réflexion totale interne (RTI) d'une fibre optique microstructurée conforme à la figure 1, et caractérisée par un pas $\Lambda$ de réseau d'inclusions valant 0,92$\mu$m et par un rapport $d_3/\Lambda$ des inclusions d'indice $n_3$ valant 0,1518, l'indice de la silice variant selon la loi de Sellmeier ;

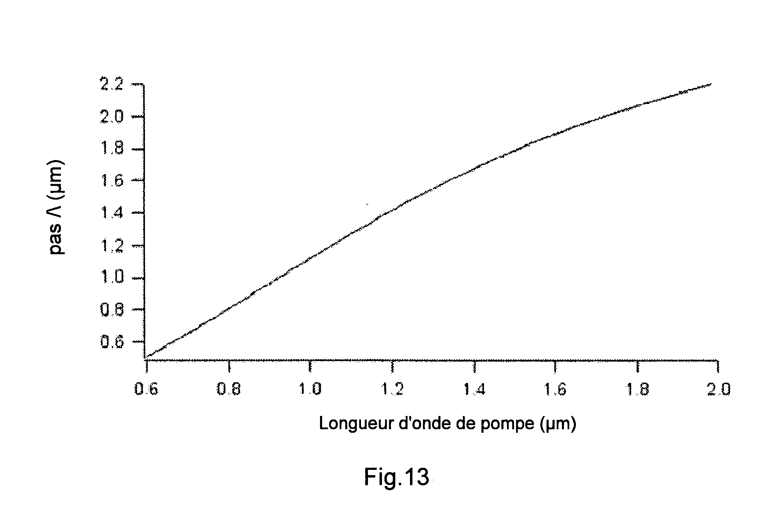

- la figure 13 est une courbe représentant l'évolution (en $\mu$m) du pas de réseau $\Lambda$ d'une fibre optique conforme à la figure 1, en fonction d'une longueur de pompe $\lambda_{RTI}$ entre 0,6$\mu$m et 2$\mu$m, pour obtenir un doublage de fréquence à partir de cette longueur d'onde de pompe, l'indice de la silice variant selon la loi de Sellmeier ;

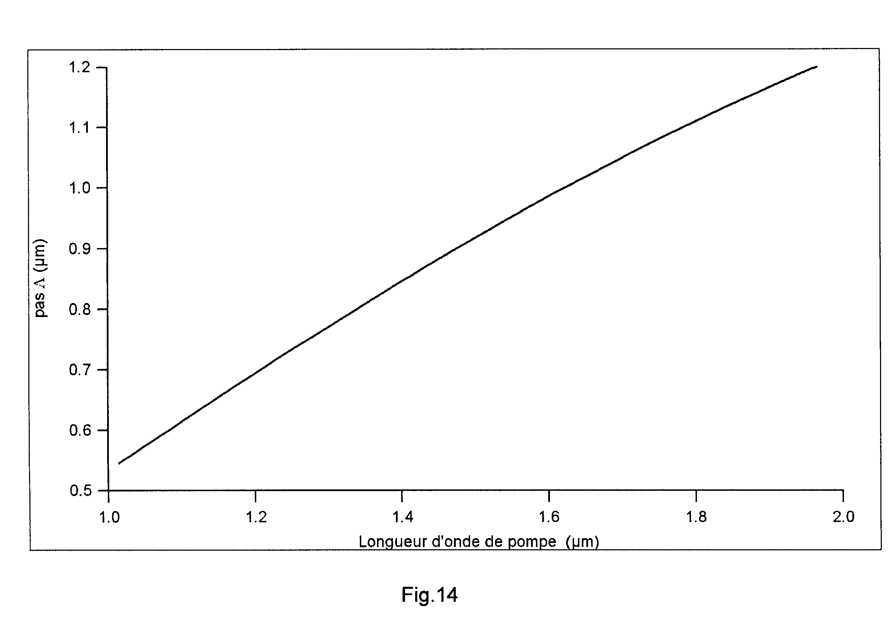

- la figure 14 est une courbe représentant l'évolution (en $\mu$m) du pas de réseau $\Lambda$ d'une fibre optique conforme à la figure 1, en fonction d'une longueur de pompe $\lambda_{RTI}$ entre 1 $\mu$m et 2$\mu$m, pour obtenir un triplage de fréquence à partir de cette longueur d'onde de pompe, l'indice de la silice variant selon la loi de Sellmeier ;

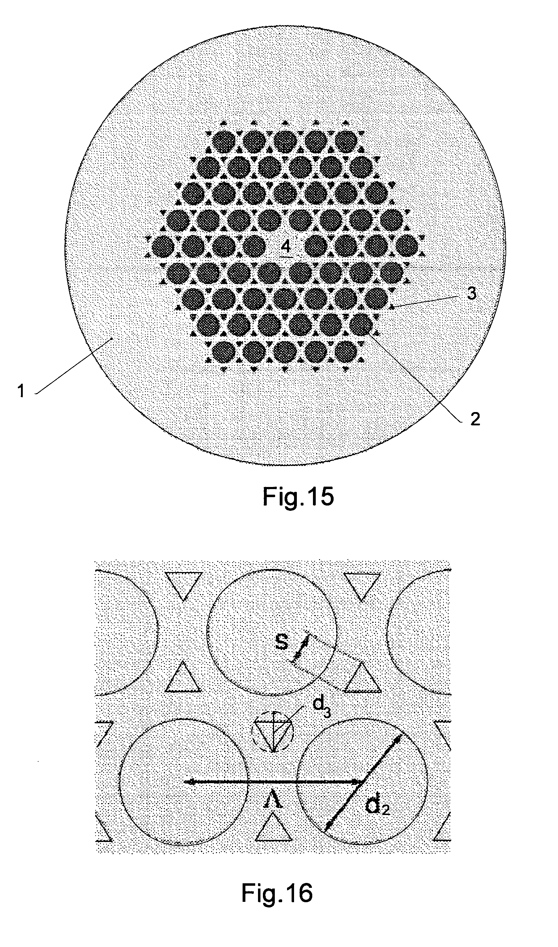

- la figure 15 est une vue en coupe transversale d'une fibre optique microstructurée conforme à une deuxième variante de réalisation de l'invention ;

- la figure 16 est un agrandissement d'une région de la coupe transversale de la figure 15.

## Description détaillée

En référence à la figure 1, une variante préférée de réalisation la fibre optique microstructurée hybride de l'invention comporte une gaine 1 qui est réalisée dans un matériau de base (« background ») d'indice de réfraction (n1), dans lequel est réalisé un réseau périodique d'inclusions 2, 3 qui s'étendent sur toute la longueur de la fibre. Au centre de la fibre, ce réseau d'inclusions 2, 3 présente un défaut central 4 (absence d'inclusions), formant le coeur de la fibre optique. Dans cette variante le coeur 4 de la fibre est donc réalisé dans le même matériau que le matériau de base de la gaine 1. Ceci n'est toutefois pas limitatif de l'invention ; dans une autre variante, le coeur 4 pourrait avoir un indice de réfraction différent de l'indice de réfraction n1 du matériau de base de la gaine ; le coeur 4 peut notamment être dans un autre matériau que le matériau de base de la gaine ou peut comporter des inclusions.

D'une manière générale, les inclusions 2 sont caractérisées par un indice de réfraction (n2) qui est supérieur à l'indice de réfraction (n1) du matériau de la gaine. Les inclusions 3 sont caractérisées par un indice de réfraction (n3) qui est inférieur à l'indice de réfraction (n1) du matériau de base de la gaine 1.

Plus particulièrement, la gaine 1 est par exemple en silice. Les inclusions 2 sont constituées par des plots longitudinaux de silice dopée oxyde de germanium ($GeO_2$). Les inclusions 3 sont des trous d'air longitudinaux.

L'invention n'est pas limitée à ce type particulier d'inclusions. Par exemple, et de manière non exhaustive, les inclusions 2 d'indice de réfraction plus élevé pourraient être constituées par de la silice dopée phosphore, ou par des verres de tellure, de chalcogenure,... Les trous d'air 3 peuvent être remplacés par des cavités longitudinales remplies d'un fluide (liquide ou gaz différent de l'air) présentant un indice de réfraction inférieur à l'indice de réfraction (n1) du matériau de base de la gaine 1 (comme par exemple de l'eau, de l'éthanol). Les trous d'air 3 peuvent être remplacés par des plots solides longitudinaux réalisés dans un matériau présentant un indice de réfraction inférieur à l'indice de réfraction (n1) du matériau de base de la gaine 1 comme par exemple de la silice dopée Fluor, de la silice dopée oxyde de Titane ($TiO_2$).

Bien que pour la mise en oeuvre de l'invention, la silice soit un matériau particulièrement approprié pour réaliser la gaine 1, l'invention n'est toutefois pas limitée à ce seul matériau. Par exemple, le matériau de base de la gaine de la fibre optique pourrait être constitué par des verres chalcogénures, des verres de tellure ou tout autre verre possédant une absorption négligeable dans les zones spectrales considérées par l'invention.

L'invention n'est pas limitée à la mise en oeuvre uniquement de deux types différents d'inclusions 2 et 3, mais dans d'autres variantes de réalisation, une fibre optique conforme à l'invention peut comporter plus de deux types différents d'inclusions.

Sur les figures 1 et 2, les inclusions longitudinales 2 présentent une section transversale circulaire de diamètre $d_2$, et les inclusions longitudinales 3 présentent une section transversale circulaire de diamètre $d_3$. L'invention n'est pas limitée à ces seules formes particulières, les inclusions 2 et 3 pouvant avoir en section transversale des formes totalement différentes de celles illustrées sur la figure 1. En outre, les inclusions 2 (ou 3) de même indice de réfraction ne sont pas nécessairement identiques et peuvent présenter en section transversale des dimensions et/ou des formes différentes.

Dans l'exemple particulier illustré sur la figure 1, et de manière non limitative de l'invention, le réseau d'inclusions 2,3 est périodique et est plus particulièrement de type nid d'abeille (« honeycomb»). En référence à la figure 2, ce réseau périodique est caractérisé par un pas de réseau $\Lambda$, également communément désigné « pitch », et correspondant dans cet exemple à la distance entre les centres de deux inclusions 2 adjacentes.

Plus particulièrement dans ce réseau d'inclusions de type nid d'abeille, les inclusions 2 sont agencées sous forme de couronnes hexagonales concentriques (trois couronnes dans l'exemple illustré), et chaque inclusion 2 est entourée de six inclusions 3 régulièrement réparties sur sa périphérie, à l'exception des inclusions 2 de la couronne centrale. Le coeur 4 de la fibre optique (défaut dans le réseau périodique) est obtenu en retirant au centre de ce réseau périodique une inclusion centrale 2 et ses six inclusions périphériques 3.

Bien que la mise en oeuvre d'un réseau périodique d'inclusions, notamment de type nid d'abeille, soit particulièrement adaptée pour réaliser une fibre optique microstructurée de l'invention, l'invention n'est pas limitée à ce seul type de configuration des inclusions, mais s'étend plus généralement à toute distribution d'inclusions en section transversale (distribution périodique, non périodique, ou comportant à la fois des régions périodiques et des régions non périodiques) permettant d'obtenir les caractéristiques techniques de la revendication 1.

Dans la suite de la description, et par soucis de clarté et de simplification de l'exposé de l'invention, les considérations techniques s'appliquent à une fibre optique microstructurée présentant la section transversale des figures 1 et 2, avec une gaine 1 en silice, des inclusions 2 en silice dopée oxyde de germanium ($GeO_2$), et des inclusions 3 constituées par des trous d'air. Il est toutefois à la portée immédiate et dans les compétences normales de l'homme du métier d'adapter et de transposer ces considérations techniques pour réaliser une fibre optique répondant à l'invention et présentant une structure transverse différente.

Les figures 3 et 4 ont été calculées en considérant que l'indice de réfraction de la silice suit la loi de Sellmeier (I.H. Malitson, "Interspecimen Comparison of the Refractive Index of Fused Silica", JOSA 55, 1205 (1965)). Ces figures 3 et 4 montrent qu'avec un matériau homogène d'indice n1, le différentiel ($\Delta$) d'indice de réfraction n'est jamais nul, mais passe par un minimum. Il en résulte que les indices de réfraction $n_\lambda$ et $n_{\lambda/2}$ aux deux longueurs d'ondes $\lambda$ et $\lambda/2$ ne sont jamais égaux, et que les indices de réfraction $n_\lambda$ et $n_{\lambda/3}$ aux deux longueurs d'ondes $\lambda$ et $\lambda/3$ ne sont jamais égaux. Ainsi, avec un matériau homogène d'indice n1, il n'est pas possible d'avoir un accord d'indice de phase entre deux longueurs d'onde [(figure 3 - $\lambda$ et $\lambda/2$) ; ( figure 4 - $\lambda$ et $\lambda/3$)].

Dans la fibre optique de l'invention, les inclusions 2 et 3 dans la gaine permettent de compenser l'indice de réfraction de la gaine, de telle sorte que ladite fibre permet un guidage d'un mode fondamental (de type quasi-gaussien) de la lumière par bandes interdites photoniques, et un guidage d'un mode fondamental (de type quasi-gaussien) de la lumière par réflexion totale interne avec un accord d'indice de phase à au moins deux longueurs d'onde différentes ($\lambda_{RTI}$; $\lambda_{BG1}$) entre le mode fondamental guidé dans la première bande interdite (BG1) et le mode fondamental guidé par réflexion totale interne, et en particulier à deux longueurs ($\lambda_{RTI}$; $\lambda_{BG1}$) double ou triple.

Dans une fibre optique présentant la structure particulière de la figure 1, l'apparition de ces deux modes de guidage de la lumière dépend notamment du diamètre ($d_3$) des inclusions d'indice n3. Ceci sera mieux compris à la lumière des figures 5 à 12 qui vont à présent être détaillées.

Les courbes des figures 5 à 7 on été obtenues à l'aide du logiciel MIT Photonic-bands (MPB). Ce logiciel utilise la méthode de développement en ondes planes (cf Ref.) pour calculer la structure de bandes interdites photoniques dans une structure périodique. L'indice de la silice est supposé constant et égal à 1,45 pour les diagrammes des figures 5 à 7.

Ref : Steven G. Johnson and J.D. Joannopoulos, « Block-iterative frequency-domain methods for Maxwell's equations in a planewave basis (http://www.opticsexpress.org/abstract.cfm?URI=OPEX-8-3-173) », Optics Express 8 (3) 173-190 (2001).

Les résultats des courbes des figures 8 à 12 ont été obtenus par une méthode de calcul vectoriel d'éléments finis mise en oeuvre au moyen du logiciel COMSOL multiphysics ™ (version 3.3a). Cette méthode de calcul consiste à résoudre l'équation d'Helmholtz dans une section transverse de la fibre pour une longueur d'onde donnée, et à en déduire l'indice de réfraction effectif du mode fondamental en fonction de la longueur d'onde.

Dans ces calculs, pour les inclusions 3 d'indice faible (trous d'air), l'indice de réfraction de ces inclusions était égal à 1. Pour les inclusions 2 d'indice élevé, les calculs ont été effectués en modélisant l'indice de réfraction de chaque inclusion 2 d'indice élevé par la loi parabolique suivante :

$$n(r) = -\frac{\Delta n}{R^2} r^2 + \Delta n + n1$$

Où r est la distance depuis le centre de l'inclusion, R est le rayon de l'inclusion, $\Delta n$ est la différence d'indice de réfraction entre les inclusions 2 d'indice élevé, et celui de la silice n1. On considère en outre que n1 suit la loi de Sellmeier (I.H. Malitson, "Interspecimen Comparison of the Refractive Index of Fused Silica", JOSA 55, 1205 (1965)). Pour les calculs, $\Delta n$ était une constante valant $32.10^{-3}$.

Les courbes des figures 5 à 12 ont en outre été calculées pour des fibres optiques dont le réseau d'inclusions présente les caractéristiques géométriques suivantes (communes aux figures 5 à 12): d2/$\Lambda$ = 0,725, où :

- d2 est le diamètre des inclusions 2,
- $\Lambda$ est la distance entre deux centres d'inclusions 2 (pas du réseau).

Figures 5 à 7 - Influence du ratio d3/$\Lambda$ sur l'apparition du mode de guidage par réflexion totale interne

Les diagrammes de bandes interdites photoniques des figures 5 à 7 ont été calculés pour une fibre optique comportant la structure transverse de la figure 1, mais sans défaut central 4 dans le réseau périodique d'inclusions. En outre sur ces figures 5 à 7, en plus des bandes interdites photoniques (BG1, BG2, BG3,...), on a représenté (courbe référencée nfsm) la variation d'indice effectif moyen de la gaine de la fibre optique (c'est-à-dire l'indice moyen qu'aurait le matériau homogène correspondant au materiau microstructuré de la gaine, qui est caractérisée par un réseau périodique d'inclusions d'indice de réfraction n3 et n2) en fonction de la longueur d'onde normalisée ($\lambda/\Lambda$) . Le calcul est réalisé en supposant de plus que l'indice de la silice est constant et supposé égal à 1,45.

Plus particulièrement, pour la figure 5, les calculs ont été effectués pour un réseau comportant uniquement des inclusions 2 d'indice élevé (silice dopée germanium) et ne comportant pas de trous d'air 3. La courbe nfsm reste au dessus de 1,45 (indice de réfraction de la silice pure), ce qui démontre qu'il n'est pas possible avec une telle fibre de guider un mode fondamental de la lumière par réflexion total interne.

Pour la figure 6, les calculs ont été effectués pour un réseau comportant à la fois des inclusions 2 d'indice élevé (silice dopée germanium) et des inclusions 3 d'indice faible ( trous d'air), et pour un rapport du diamètre $d_3$ des inclusions d'indice n3 sur le pas $\Lambda$ valant 0,04. La courbe nfsm reste au dessus de 1,45 (indice de réfraction de la silice pure), ce qui démontre qu'il n'est pas possible avec une telle fibre de guider un mode fondamental de la lumière par réflexion totale interne, le rayon des inclusions d'indice n3 étant trop faible pour abaisser de façon significative l'indice de réfraction moyen nfsm.

Pour la figure 7, les calculs ont été effectués pour un réseau comportant à la fois des inclusions 2 d'indice élevé (silice dopée germanium) et des inclusions 3 d'indice faible (trous d'air), et pour un rapport du diamètre des inclusions d'indice de réfraction n3 sur le pas du réseau A valant 0,1518. La courbe nfsm passe au dessous de 1,45 (indice de réfraction de la silice pure), ce qui démontre qu'il est possible avec une telle fibre de guider un mode fondamental de la lumière, non seulement par bandes phoniques interdites, mais également par réflexion totale interne, le rapport $d_3/\Lambda$ des inclusions d'indice de réfraction n3 étant suffisamment important, et en particulier suffisamment important pour que l'indice effectif moyen (nfsm) de la gaine 1 soit inférieur à l'indice de réfraction n1 du matériau de base de la gaine 1.

Figures 8 à 12 - accord d'indice de phase

L'évolution de l'indice de réfraction effectif (n) du mode fondamental dans la première bande photonique interdite (BG1) et dans la bande en réflexion totale interne (RTI) pour une fibre optique conforme aux figures 1 et 2 (avec inclusions 2 en silice dopée germanium et inclusion 3 formées par des trous d'air) a été calculée pour différentes valeurs du pas ($\Lambda$) du réseau d'inclusions. Les résultats de ces calculs correspondent aux courbes des figures 8 à 12. L'indice de réfraction n1 évolue selon la loi de Sellmeier. Les valeurs du pas ($\Lambda$) du réseau d'inclusions étaient les suivantes :

> Figure 8 : $\Lambda$ = 0,798 $\mu$m
> Figure 9 : $\Lambda$ = 1,386 $\mu$m
> Figure 10 : $\Lambda$ = 1,785 $\mu$m
> Figure 11 : $\Lambda$ = 0,588 $\mu$m
> Figure 12 : $\Lambda$ = 0,92 $\mu$m

Sur ces figures 8 à 12, la courbe de gauche référencée (Mode BG1) représente la variation d'indice de réfraction effectif (n), en fonction de la longueur d'onde (en $\mu$m), du mode fondamental (de type quasi-gaussien) guidé dans la première bande interdite photonique (BG1) ; la courbe de droite référencée (Mode RTI) représente la variation d'indice de réfraction effectif (n), en fonction de la longueur d'onde (en $\mu$m), du mode fondamental (de type quasi-gaussien) guidé dans la bande en réflexion totale interne (RTI).

Dans cette fibre optique microstructurée de l'invention, les inclusions 2 d'indice de réfraction élevé sont responsables de l'apparition d'un mécanisme de guidage suivant l'axe longitudinal de la fibre d'un mode fondamental de la lumière par bandes interdites photoniques, et les inclusions 3 d'indice de réfraction faible sont responsables de l'apparition d'un mécanisme de guidage suivant l'axe longitudinal de la fibre d'un mode fondamental de la lumière par réflexion totale interne.

Les courbes des figures 8 à 12, montrent que dans chaque cas il est possible avec cette fibre optique microstructurée d'avoir une égalité des indices de réfraction effectif (n) du mode fondamental :

> (i) à deux longueurs d'ondes différentes $\lambda_{BG1}$ et $\lambda_{RTI}$, et
> (ii) pour une valeur de l'indice de réfraction (n) qui est inférieure à l'indice de réfraction du matériau de base de la gaine 1.

Il en résulte un accord d'indice de phase aux longueurs d'ondes $\lambda_{BG1}$ et $\lambda_{RTI}$ entre respectivement le mode fondamental guidé dans la première bande interdite (BG1) et le mode fondamental guidé par réflexion totale interne. On notera en outre sur les figures 8 à 12, que la différence entre lesdites longueurs d'onde $\lambda_{BG1}$ et $\lambda_{RTI}$ est telle que la longueur d'onde $\lambda_{RTI}$ est située au-delà de la gamme de longueur d'ondes du mode fondamental guidé dans la première bande interdite (BG1) [condition (a) de l'invention].

Grâce à cet accord d'indice de phase, on peut par exemple utiliser avantageusement la fibre optique pour générer, avec un rendement optique élevé, un mode fondamental centré sur une longueur d'onde $\lambda_{BG1}$ à partir d'un mode fondamental centré sur une longueur d'onde $\lambda_{RTI}$ de pompe supérieure. Bien entendu, dans le cas par exemple du doublage de fréquence (respectivement du triplage de fréquence), de manière connue en soi par l'homme du métier on veillera à ce que la fibre optique vérifie en plus une susceptibilité $\chi^{(2)}$ (respectivement $\chi^{(3)}$), qui peut être obtenue par une méthode dite de « poling » , tel que cela est enseigné par exemple dans : P. G. Kazansky, L. Dong et P. Russell « High second order nonlinearities in poled silicate fiber », Vol. 19, No 10, p 701 (1994) Optics Letters.

Plus particulièrement dans les exemples des figures 8 à 12, l'accord d'indice de phase peut avantageusement être obtenu pour le doublage ou le triplage de fréquence aux longueurs d'onde suivantes :

> Figure 8 : $\lambda_{BG1}$ = 0,4 $\mu$m et $\lambda_{RTI}$ = 0,8 $\mu$m (doublage de fréquence)
> Figure 9 : $\lambda_{BG1}$ = 0,59 $\mu$m et $\lambda_{RTI}$ = 1,18 $\mu$m (doublage de fréquence)
> Figure 10 : $\lambda_{BG1}$ = 0,75 $\mu$m et $\lambda_{RTI}$ = 1,5 $\mu$m (doublage de fréquence)
> Figure 11 : $\lambda_{BG1}$ = 0,354 $\mu$m et $\lambda_{RTI}$ = 1,064 $\mu$m (triplage de fréquence)
> Figure 12 : $\lambda_{BG1}$ = 0,5 $\mu$m et $\lambda_{RTI}$ = 1,5 $\mu$m (triplage de fréquence).

Les exemples des figures 8 à 12 ne sont pas limitatifs et exhaustifs de l'invention. Plus généralement, les longueurs d'onde ($\lambda_{RTI}$; $\lambda_{BG1}$) correspondant à un accord d'indice de phase peuvent être un multiple entier l'une de l'autre ($\lambda_{RTI}$ = k. $\lambda_{BG1}$, k étant un entier supérieur ou égal à 2).

Les courbes des figures 13 et 14 montre l'évolution du pas $\Lambda$ du réseau d'inclusions 2, 3 en fonction de la longueur d'onde de pompe $\lambda_{RTI}$, pour obtenir respectivement un doublage de fréquence ou un triplage de fréquence, à partir de cette longueur d'onde de pompe $\lambda_{RTI}$. Ces courbes des figures 13 et 14 montrent qu'il est possible d'obtenir également un accord d'indice de phase avec doublage de fréquence ou triplage de fréquence pour d'autres valeurs du pas $\Lambda$ du réseau d'inclusions 2, 3. Il en est de même en ce qui concerne le triplage de fréquence, ou plus généralement la génération d'une fréquence qui est un multiple entier de la fréquence de pompe.

L'invention n'est pas limitée aux exemples particuliers de réalisation décrite en référence aux figures annexées. D'autres variantes de réalisation à la portée de l'homme du métier et couvertes par les revendications annexées peuvent être envisagées, sans pour autant sortir du cadre de l'invention.

A titre d'exemple, on a représenté sur les figures 15 et 16, une autre variante de réalisation d'une fibre optique de l'invention dans laquelle les inclusions d'indice (n3) présentent une section transversale en forme de triangle équilatéral de largeur (s), inscrit dans un cercle (fictif) de diamètre d3.

L'invention n'est pas limitée à une fibre optique microstructurée telle que décrite en référence aux figures annexées et qui serait utilisable uniquement pour le doublage de fréquence ou le triplage de fréquence par effets non linéaires. Plus généralement, la fibre optique microstructurée de l'invention peut être conçue pour permettre un mélange à (m) ondes par effets non linéaires [$w_1$ + $w_2$ + ...$w_{m-1}$ → $w_m$ ou $w_m$ → $w_1$ + $w_2$ + ...$w_{m-1}$, avec $w_i$ = $2\pi c/\lambda_i$, m étant un entier supérieur ou égal à 3, c étant la vitesse de la lumière dans le vide], les inclusions de la gaine de la fibre optique de l'invention étant telles que le mode fondamental guidé dans la première bande interdite (BG1) et le mode fondamental guidé par réflexion totale interne (RTI) respectent cumulativement les conditions (a) et (b) ci-après pour au moins deux longueurs d'onde $\lambda_i$ différentes :

$$\text{(a)} \quad \sum_{i=1}^{m-1} \frac{1}{\lambda_i} = \frac{1}{\lambda_m}$$

$$\text{(b)} \quad \sum_{i=1}^{m-1} \frac{n_{\lambda_i}}{\lambda_i} = \frac{n_{\lambda_m}}{\lambda_m}$$

m étant un entier supérieur ou égal à 3, et $n_{\lambda i}$ étant la valeur de l'indice de réfraction effectif de la fibre optique à la longueur d'ondes $\lambda_i$.

En outre conformément à l'invention, parmi les longueurs d'onde $\lambda_i$ respectant les conditions (a) et (b), au moins une longueur d'onde ($\lambda_{RTI}$) appartient au mode fondamental guidé par réflexion totale interne (RTI), et au moins une longueur d'onde ($\lambda_{BG1}$) appartient au mode fondamental guidé dans la première bande interdite (BG1).

Par exemple, dans le cas particulier d'un mélange à trois ondes (m = 3 et $w_1$ + $w_2$ → w3), les conditions (a) et (b) précitées deviennent :

$$\text{(a)} \quad \frac{1}{\lambda_1} + \frac{1}{\lambda_2} = \frac{1}{\lambda_3}$$

$$\text{(b)} \quad \frac{n_{\lambda_1}}{\lambda_1} + \frac{n_{\lambda_2}}{\lambda_2} = \frac{n_{\lambda_3}}{\lambda_3}$$

Par exemple, dans le cas particulier d'un mélange à quatre ondes ( m=4 et $w_1$ + $w_2$ + $w_3$ → w4), les conditions (a) et (b) précitées deviennent:

$$\text{(a)} \quad \frac{1}{\lambda_1} + \frac{1}{\lambda_2} + \frac{1}{\lambda_3} = \frac{1}{\lambda_4}$$

$$\text{(b)} \quad \frac{n_{\lambda_1}}{\lambda_1} + \frac{n_{\lambda_2}}{\lambda_2} + \frac{n_{\lambda_3}}{\lambda_3} = \frac{n_{\lambda_4}}{\lambda_4}$$

## Revendications

1. Fibre optique microstructurée comportant un coeur (4) entouré par une gaine (1), la gaine (1) comprenant un matériau de base d'indice de réfraction (n1) et une pluralité d'inclusions d'au moins deux types différents, un premier type d'inclusions (2) d'indice de réfraction (n2) supérieur à l'indice de réfraction (n1) du matériau de base, et un deuxième type d'inclusions (3) d'indice de réfraction (n3) inférieur à l'indice de réfraction (n1) du matériau de base, ladite fibre permettant un guidage d'un mode fondamental de la lumière par bandes interdites photoniques, **caractérisée en ce que** les inclusions (2, 3) de la gaine sont agencées de manière à obtenir également un guidage d'un mode fondamental de la lumière par réflexion totale interne (RTI), et **en ce que** le mode fondamental guidé dans la première bande interdite (BG1) et le mode fondamental guidé par réflexion totale interne (RTI) respectent cumulativement les conditions (a) et (b) suivantes pour au moins deux longueurs d'onde $\lambda_i$ différentes :

$$\text{(a)} \quad \sum_{i=1}^{m-1} \frac{1}{\lambda_i} = \frac{1}{\lambda_m}$$

$$\text{(b)} \quad \sum_{i=1}^{m-1} \frac{n_{\lambda_i}}{\lambda_i} = \frac{n_{\lambda_m}}{\lambda_m}$$

m étant un entier supérieur ou égal à 3, et $n_{\lambda i}$ étant la valeur de l'indice de réfraction effectif de la fibre optique à la longueur d'ondes $\lambda_i$,

et **en ce que** parmi les longueurs d'onde $\lambda_i$ respectant les conditions (a) et (b), au moins une longueur d'onde ($\lambda_{RTI}$) appartient au mode fondamental guidé par réflexion totale interne (RTI), et au moins une longueur d'onde ($\lambda_{BG1}$) appartient au mode fondamental guidé dans la première bande interdite (BG1).

2. Fibre optique microstructurée selon la revendication 1, **caractérisée en ce que** les conditions (a) et (b) sont respectées pour deux longueurs d'onde $\lambda_{RTI}$ et $\lambda_{BG1}$ appartenant respectivement au mode fondamental guidé par réflexion totale interne (RTI) et au mode fondamental guidé dans la première bande interdite (BG1), **en ce que** les indices de réfraction effectifs à ces deux longueurs d'onde ($n_{\lambda RTI}$; $n_{\lambda BG1}$) sont égaux, et **en ce que** ces deux longueurs d'onde ($\lambda_{RTI}$; $\lambda_{BG1}$) d'accord d'indice de phase respectent la condition suivante : $\lambda_{RTI} = k.\lambda_{BG1}$, k étant un entier supérieur ou égal à 2.

3.  Fibre optique microstructurée selon la revendication 2, **caractérisée en ce que** lesdites longueurs d'onde d'accord d'indice de phase ($\lambda_{RTI}$; $\lambda_{BG1}$) respectent la condition suivante : $\lambda_{RTI} = 2\lambda_{BG1}$.

4.  Fibre optique microstructurée selon la revendication 2, **caractérisée en ce que** les longueurs d'onde d'accord d'indice de phase ($\lambda_{RTI}$; $\lambda_{BG1}$) respectent la condition suivante : $\lambda_{RTI} = 3\lambda_{BG1}$.

5.  Fibre optique microstructurée selon l'une des revendications 2 à 4, **caractérisée en ce que** la longueur d'onde ($\lambda_{RTI}$) d'accord d'indice de phase du mode fondamental guidé par réflexion totale interne (RTI) est située en dehors de la gamme de longueur d'ondes du mode fondamental guidé dans la première bande interdite (BG1).

6.  Fibre optique microstructurée selon l'une des revendications 1 à 5, **caractérisée en ce que** les inclusions (2,3) sont agencées sous la forme d'un réseau périodique **caractérisé par** un pas constant ($\Lambda$) correspondant à la distance entre les centres de deux inclusions (2) du premier type.

7.  Fibre optique microstructurée selon la revendication 6, **caractérisée en ce que** le réseau d'inclusion (2,3) est hexagonal de type nid d'abeille.

8.  Fibre optique selon la revendication 7, **caractérisée en ce que** le réseau d'inclusion (2,3) comporte au moins deux couronnes hexagonales et concentriques formées par des d'inclusions (2) du premier type, chaque inclusion (2) du premier type étant entourée de six inclusions (3) du deuxième type, à l'exception des inclusions (2) de premier type de la couronne centrale.

9.  Fibre optique selon l'une des revendications 6 à 8, **caractérisée en ce que** la dimension des inclusions (3) du deuxième type et le pas ($\Lambda$) du réseau d'inclusions sont choisis de telle sorte que l'indice effectif moyen (nfsm) de la gaine (1) est inférieur à l'indice de réfraction (n1) du matériau de base de la gaine (1).

10. Fibre optique selon l'une des revendications 6 à 9, **caractérisée en ce que** le pas ($\Lambda$) du réseau d'inclusions est égal à l'une des valeurs suivantes : 0,798$\mu$m; $\Lambda$ = 1,386$\mu$m; $\Lambda$ = 1,785$\mu$m; $\Lambda$ = 0,588$\mu$m; $\Lambda$ = 0,92$\mu$m.

11. Fibre optique selon l'une des revendications 6 à 10, **caractérisée en ce que** les inclusions (3) du deuxième type ont une section transversale circulaire de diamètre ($d_3$), une section transversale inscrite dans un cercle de diamètre ($d_3$), et **en ce que** le réseau d'inclusions (2,3) est **caractérisé par** la relation suivante : d3/$\Lambda$ = 0,1518.

12. Fibre optique selon l'une des revendications 1 à 11, **caractérisée en ce que** le matériau de base de la gaine est en silice et les inclusions (3) du deuxième type comportent des trous d'air.

13. Fibre optique selon l'une des revendications 1 à 12, **caractérisée en ce que** le matériau de base de la gaine est en silice et les inclusions (2) du premier type comportent des inclusions en silice dopée.

14. Fibre optique selon la revendication 13, **caractérisée en ce que** les inclusions (2) du premier type comportent des inclusions en silice dopée germanium ou en silice dopée phosphore.

15. Fibre optique selon l'une des revendications 1 à 12, **caractérisée en ce que** le matériau de base de la gaine est en silice et les inclusions (2) du premier comportent des inclusions en verre de tellure ou en verre de chalcogenure.

16. Fibre optique selon l'une des revendications 1 à 15, **caractérisée en ce que** les inclusions (2) du premier type comportent des inclusions contenant un liquide ou gaz présentant un indice de réfraction (n2) supérieur à l'indice de réfraction (n1) du matériau de base de la gaine (1).

17. Fibre optique selon l'une des revendications 1 à 16, **caractérisée en ce que** les inclusions (3) du deuxième type comportent des inclusions contenant un liquide ou gaz présentant un indice de réfraction (n3) inférieur à l'indice de réfraction (n1) du matériau de base de la gaine (1).

18. Fibre optique microstructurée selon l'une des revendications 1 à 17, **caractérisée en ce que** le coeur (4) de la fibre est constitué par le même matériau que le matériau de base de la gaine (1).

19. Utilisation d'une fibre optique microstructurée visée à l'une des revendication 1 à 18 pour la génération de fréquences par effets non linéaires, et notamment pour l'une des applications suivantes : génération de photons jumeaux, génération de photons triplets, générations de fréquences multiples, en particulier doublage de fréquence, triplage de fréquence.

Fig.1

Fig.2

Fig.3

Fig.4

EP 2 020 611 A1

Fig.5

EP 2 020 611 A1

Fig.6

Fig.7

Fig.8

Fig.9

Fig.10

Fig.11

Fig.12

EP 2 020 611 A1

Fig.13

Fig.14

Fig.15

Fig.16

**Office européen des brevets**

**RAPPORT DE RECHERCHE EUROPEENNE**

Numéro de la demande

EP 07 37 0013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MORTENSEN N A ET AL: "Photonic crystal fiber with a hybrid honeycomb cladding" OPTICS EXPRESS OPT. SOC. AMERICA USA, vol. 12, no. 3, 9 février 2004 (2004-02-09), XP002464105 ISSN: 1094-4087 * le document en entier * | 1-19 | INV. G02B6/02 G02F1/35 |
| A | BETOURNE A ET AL: "Solid photonic bandgap fiber assisted by an extra air-clad structure for low-loss operation around 1.5 [mu]m" OPTICS EXPRESS OPT. SOC. AMERICA USA, vol. 15, no. 2, janvier 2007 (2007-01), XP002464106 ISSN: 1094-4087 * le document en entier * | 1-19 | |
| A,D | CERQUEIRA A S JR ET AL: "Hybrid photonic crystal fiber" OPTICS EXPRESS OPT. SOC. AMERICA USA, vol. 14, no. 2, janvier 2006 (2006-01), XP002464107 ISSN: 1094-4087 * le document en entier * | 1-19 | **DOMAINES TECHNIQUES RECHERCHES (IPC)** G02B G02F |
| A | EFIMOV A ET AL: "Phase-matched third harmonic generation microstructured fibers" OPTICS EXPRESS OPT. SOC. AMERICA USA, vol. 11, no. 20, 6 octobre 2003 (2003-10-06), XP002464108 ISSN: 1094-4087 * le document en entier * | 1-19 | |

-/--

Le présent rapport a été établi pour toutes les revendications

| Lieu de la recherche | Date d'achèvement de la recherche | Examinateur |
|---|---|---|
| Munich | 10 janvier 2008 | Jakober, François |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

Office européen
des brevets

**RAPPORT DE RECHERCHE EUROPEENNE**

Numéro de la demande

EP 07 37 0013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | LAEGSGAARD J ET AL: "Doped photonic bandgap fibers for short-wavelength nonlinear devices" OPTICS LETTERS, OSA, OPTICAL SOCIETY OF AMERICA, WASHINGTON, DC, US, vol. 28, no. 10, 15 mai 2003 (2003-05-15), pages 783-785, XP002328354 ISSN: 0146-9592 * le document en entier * ----- | 1-19 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 10 janvier 2008 | Jakober, François |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JESPER LAEGSGAARD ; ANDERS BJARKLEV.** Doped photonic bandgap fibers for short-wavelength non linear devices. *OPTICS LETTERS,* 2003, vol. 28 (10), 783
- **ARISMAR CERQUEIRA et al.** Hybrid photonic crystal fiber. *OPTICS EXPRESS,* 2006, vol. 14 (2), 926
- **A. EFIMOV ; A.J. TAYLOR ; F.G OMENETTO ; J.C. KNIGHT ; W.J. WADSWORTH ; P. ST.J. RUSSEL.** Phase matched third harmonics generation in microstructured fibers. *OPTICS EXPRESS,* 06 Octobre 2003, vol. 11 (20), 2567
- **JESPER LAEGSGAARD ; ANDERS BJARKLEV.** Doped photonic bandgap fibers for short-waveiength non linear devices. *OPTICS LETTERS,* 2003, vol. 28 (10), 783
- **I.H. MALITSON.** Interspecimen Comparison of the Refractive Index of Fused Silica. *JOSA,* 1965, vol. 55, 1205
- **STEVEN G. JOHNSON ; J.D. JOANNOPOULOS.** Block-iterative frequency-domain methods for Maxwell's equations in a planewave basis (http://www.opticsexpress.org/abstract.cfm?URI=OPEX-8-3-173. *Optics Express,* 2001, vol. 8 (3), 173-190
- **P. G. KAZANSKY ; L. DONG ; P. RUSSELL.** High second order nonlinearities in poled silicate fiber. *Optics Letters,* 1994, vol. 19 (10), 701